# EUROPÄISCHE PATENTSCHRIFT

(11) **EP 1 623 881 B1**
(45) Veröffentlichungstag und Bekanntmachung des Hinweises auf die Patenterteilung: **16.01.2008**
(21) Anmeldenummer: 05015713.0
(22) Anmeldetag: 20.07.2005
(51) Int. Cl.: B60R 19/34

(54) **Crashbox für Kraftfahrzeuge**
Crashbox for motor vehicles
Cashbox pour véhicules automobiles

(30) Priorität: 04.08.2004 DE 102004037769
(43) Veröffentlichungstag der Anmeldung: 08.02.2006
(73) Patentinhaber: GM Global Technology Operations, Inc., Detroit, MI 48265-3000 (US)
(72) Erfinder: Maucher, Roland, 63263 Neu-Isenburg (DE)
(74) Vertreter: Daniel, Ulrich W.P.

(56) Entgegenhaltungen:
- EP-A- 0 908 356
- DE-A1- 4 209 826
- DE-A1- 19 533 366
- DE-C1- 19 603 953
- US-B1- 6 192 584
- US-B1- 6 299 227

## Beschreibung

Die Erfindung betrifft eine Crashbox für Kraftfahrzeuge gemäß den Merkmalen des Oberbegriffs des Patentanspruchs 1.

Die Hauptaufgabe einer Crashbox ist, im Versicherungscrashtest (16 km/h, teilüberdeckt, gegen eine starre Wand) einen großen Anteil der kinetischen Energie aufzunehmen, so dass die dahinter liegende Fahrzeugstruktur ungeschädigt bleibt und das Fahrzeug eine gute Typschadenseinstufung erhält.

Aluminiumcrashboxen sind wegen der geringeren Dichte des Aluminiums im Vergleich zu Stahl und der Position der Crashboxen weit vor der Vorderachse besonders interessant. Dies insbesondere unter dem Aspekt des Leichtbaus, der Achslastverteilung und der aufgrund des geringen Gewichts reduzierten CO₂-Emission.

Aluminiumcrashboxen werden in der Praxis in der Regel als Extrusionsteil ausgeführt, dabei ist die Extrusionsrichtung in der Regel die Fahrzeugfahrtrichtung, bezogen auf die Geradeausfahrt des Fahrzeugs, somit die Längsrichtung des Fahrzeugs. Die Crashbox wird auf eine Grundplatte geschweißt, die an das Fahrzeug geschraubt wird.

Diese Schweißverbindung stellt sich immer wieder als sehr kritisch heraus. Vor allem ist ein Abreißen der Verbindung im Highspeedcrashtest zu verzeichnen. Deshalb wird in der Praxis ein hoher Aufwand getrieben, diese Verbindung qualitativ sehr hochwertig auszuführen.

Für ein optimales Funktionieren einer Crashbox sind in der Regel sogenannte Anfalthilfen erforderlich. Mit diesen Anfalthilfen wird die Anfaltkraft eingestellt, mit der das System zu Falten beginnt. Weiterhin wird damit auch das Kraftniveau während des Faltens gesteuert. Wird eine Crashbox in Fahrzeugfahrtrichtung extrudiert, ist ein Einbringen von Anfalthilfen nur nachträglich möglich. Dadurch entstehen erhebliche Mehrkosten, außerdem ist die Formgebung der Anfalthilfen sehr eingeschränkt.

Bei einer Crashbox, die erste Wandungen aufweist, die im Extrusionsverfahren hergestellt sind und, bezogen auf deren Extrusionsrichtung, im Wesentlichen in Fahrzeugfahrtrichtung geradeaus angeordnet sind, und die im Extrusionsverfahren hergestellt ist, sind demzufolge nur erste Wandungen vorgesehen, die die Crashbox bilden.

Eine Crashbox für Kraftfahrzeuge mit den Merkmalen des Oberbegriffs des Patentanspruchs 1 ist aus der DE 196 03 953 C1 bekannt. Diese Crashbox ist zweiteilig ausgebildet, wobei zur Befestigung der Crashbox an einem Querträger und einem Längsträger des Kraftfahrzeuges zunächst ein erstes Profilteil der Crashbox bis zu einem Flanschteil eines zweiten Profilteiles der Crashbox geschoben wird und dann Schenkel des zweiten Profilteiles der Crashbox mit entsprechenden Seitenflächen des Querträgers verbunden, insbesondere verschweißt werden. Das Flanschteil des zweiten Profilteils der Crashbox wird mit dem Längsträger verbunden. Die Crashbox besteht aus einer Aluminiumlegierung. Das erste Profilteil der Crashbox ist im Extrusionsverfahren hergestellt und, bezogen auf dessen Extrusionsrichtung, im Wesentlichen in Fahrzeugfahrtrichtung Geradeaus angeordnet. Dieses Profilteil weist eine rechteckige Gestaltung auf und bildet damit eine Kammer, die das zweite Profilteil durchsetzt. Das zweite Profilteil ist gleichfalls im Extrusionsverfahren hergestellt und, bezogen auf dessen Extrusionsrichtung, im rechten Winkel zur Extrusionsrichtung des ersten Profilteils, bezogen auf dessen Einbaulage, angeordnet. Die Wandungen der beiden Profilteile weisen ein gerades Profil auf.

Aufgabe der vorliegenden Erfindung ist es, eine Crashbox der eingangs genannten Art weiter zu bilden, die die vorgenannten Nachteile vermeidet und sich demzufolge durch ein optimiertes Crashverhalten auszeichnet. Der Material- und Herstellungsaufwand soll bei der Crashbox besonders gering sein.

Gelöst wird die Aufgabe durch eine Crashbox, die gemäß den Merkmalen des Patentanspruches 1 ausgebildet ist.

Die zweiten Wandungen weisen ein von einer Geraden abweichendes Profil auf, das die Anfalthilfe bildet. Insbesondere weist dieses Profil der zweiten Wandungen eine Wellenform auf.

Die erfindungsgemäße Gestaltung ermöglicht, die bisher kritische Verbindung der aus der Praxis bekannten Crashbox zur Grundplatte wesentlich unkritischer auszuführen. So ist insbesondere vorgesehen, dass die zweiten Wandungen stirnseitig mit den ersten Wandungen verschweißt sind. Ferner, dass erste Wandungen mit der Grundplatte verschweißt sind, insbesondere stirnseitig mit der Grundplatte verschweißt sind. Im Gegensatz zu der aus der Praxis bekannten Crashbox sind nur halb so viele Schweißverbindungen zur Grundplatte vorzusehen, nämlich nur noch im Bereich der ersten Wandungen.

Erfindungsgemäß können damit Anfalthilfen in eine extrudierte Crashbox eingebracht werden, wodurch die Crashbox hinsichtlich ihrer eigenen Funktion optimiert werden kann. Während insbesondere mittels der ersten Wandungen in herkömmlicher Art und Weise mehr oder weniger komplizierte Profile gebildet werden können, gewährleisten insbesondere die zweiten Wandungen, die in der anderen Richtung als die ersten Wandungen angeordnet sind, die Funktion der Anfalthilfen. Diese zweiten Wandungen können - unter Berücksichtigung der erfindungsgemäßen Merkmale - in beliebigen Profilen hergestellt werden, je nach den Anforderungen einer optimierten Anfahrhilfe. Dadurch, dass die Crashbox ausschließlich aus Extrusionsteilen hergestellt wird, ist sowohl der Materialaufwand als auch der Herstellungsaufwand bei der erfindungsgemäßen Crashbox nicht wesentlich teurer als bei einer herkömmlichen Crashbox.

In einem bevorzugten Ausführungsbeispiel der Erfindung sind bei der Crashbox die Wandungen, bezogen auf deren Extrusionsrichtung, im rechten Winkel zu den ersten Wandungen, bezogen auf deren Extrusionsrichtung, angeordnet. Die ersten Wandungen bilden insbesondere ein gerades Profil. Mehrere erste Wandungen, beispielsweise drei erste Wandungen, bilden einen extrudierten Körper der Crashbox. Dieser Körper weist beispielsweise einen H-förmigen Querschnitt auf.

In einer bevorzugten Gestaltung der Crashbox sind zwei zweite Wandungen vorgesehen, die senkrecht zu den parallelen Schenkeln des H-förmigen Körpers angeordnet sind und zwar in den abgewandten Endbereichen des Körpers, parallel zu dem die Schenkel des Körpers verbindenden Steg.

Hierdurch ist eine, in Fahrzeugfahrtrichtung gesehen, geschlossene Crashbox gebildet, mit zwei parallelen ersten Wandungen, einer senkrecht zu diesen beiden ersten Wandungen verlaufenden mittleren weiteren ersten Wandung sowie zwei parallel zu dieser mittleren Wandung angeordneten zweiten Wandungen auf jeder Seite dieser mittleren Wandung.

Bevorzugte Weiterbildungen der Erfindung ergeben sich aus den abhängigen Unteransprüchen und der nachfolgenden Beschreibung. Nachfolgend wird ein Ausführungsbeispiel der Erfindung, ohne hierauf beschränkt zu sein, unter Bezugnahme auf die Zeichnung näher erläutert. Erläutert ist, zum besseren Verständnis, ferner der Stand der Technik.

In der Zeichnung zeigt:
- Fig. 1: eine stark vereinfachte Darstellung einer Vorderansicht eines Kraftfahrzeuges mit Crashbox gemäß dem aus der Praxis bekannten Stand der Technik;
- Fig. 2: die in Figur 1 gezeigte Crashbox in vergrößerter Darstellung;
- Fig. 3: die erfindungsgemäße Crashbox mit Grundplatte;
- Fig. 4: die erfindungsgemäße Crashbox gem. Figur 3, vor deren Zusammenbau und Verbindung.

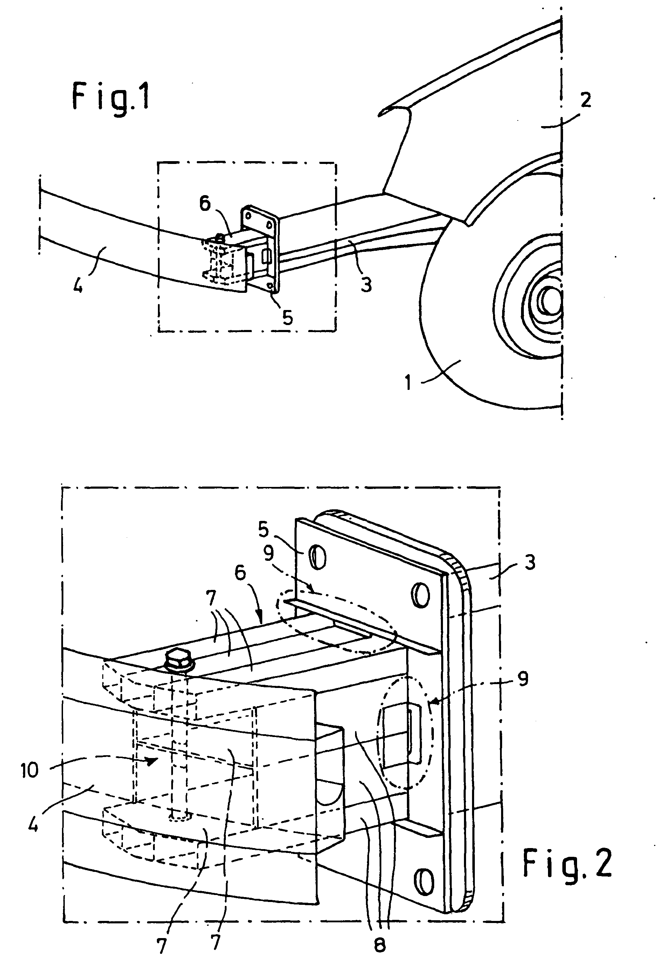

Figur 1 veranschaulicht bei einem Personenkraftwagen dessen Vorderrad 1, Kotflügel 2, Längsträger 3 und Stoßstangenmodul 4. Mit dem vorderen Ende des Längsträgers 3 ist eine Grundplatte 5 verbunden, mit der die Crashbox 6 gemäß dem Stand der Technik verschweißt ist. Die Crashbox 6 besteht aus Aluminium und ist im Extrusionsverfahren hergestellt. Die Wandungen der Crashbox sind, bezogen auf deren Extrusionsrichtung, im Wesentlichen in Fahrzeugfahrtrichtung geradeaus angeordnet. Wandungen, deren Ebenen in der einen Richtung verlaufen, sind mit der Bezugsziffer 7, Wandungen, deren Ebenen senkrecht hierzu verlaufen, mit der Bezugsziffer 8 bezeichnet. Auf diese Weise sind in der Crashbox 6 diverse, unterschiedlich große Kammern gebildet, deren Längserstreckung mit der Fahrzeugfahrtrichtung geradeaus übereinstimmt. Im Bereich der ovalen Kreise 9 ist die Crashbox 6 mit der Grundplatte 5 verschweißt. Die Verschweißung erfolgt nicht nur im Bereich der beiden sichtbaren, mit den Kreisen 9 bezeichneten Bereichen, sondern auch im Bereich der anderen beiden, nicht sichtbaren Seiten - Unterseite und hintere Seite - der Crashbox 6. Diese vier Schweißbereiche stellen kritische Schweißbereiche dar.

Im Bereich des der Grundplatte 5 abgewandten Endes der Crashbox durchsetzt diese eine Bolzen-Mutter-Verbindung 10, die dem Befestigen des Stoßstangenmoduls 4 an der Crashbox 6 dient.

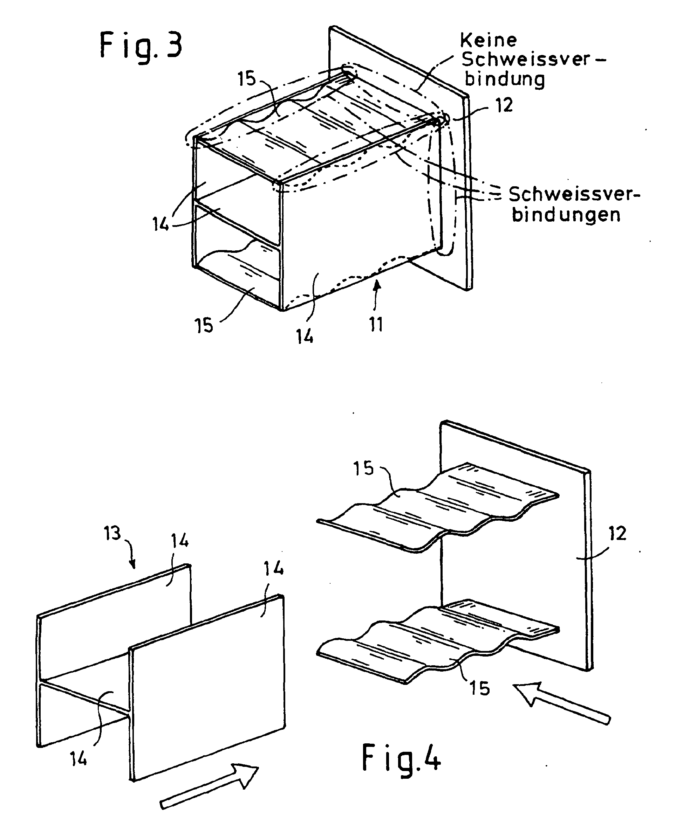

Beim Stand der Technik, wie er zu den Figuren 1 und 2 verdeutlicht ist, sind die Wandungen 7 und 8 der Crashbox 6 somit nur in einer Extrusionsrichtung angeordnet, die mit der Fahrzeugfahrrichtung geradeaus im Wesentlichen übereinstimmt. Diese Crashbox 6 weist keine Anfalthilfen auf.

Hinsichtlich der erfindungsgemäßen Ausführungsform wird auf die in der Figur 3 veranschaulichte Crashbox 11 verwiesen, ferner auf deren noch nicht montierte Einzelteile, wie sie in der Figur 4 veranschaulicht sind. Gezeigt ist in der Figur 3 die Crashbox 11 und die Grundplatte 12, an der die Crashbox 11 befestigt ist.

Gezeigt ist, dass die Crashbox 11 einen extrudierten Körper 13 aufweist. Dieser weist H-förmigen Querschnitt auf. Er ist durch erste Wandungen 14 mit geradem Profil gebildet, wobei zwei erste Wandungen 14 parallel zueinander angeordnet sind und zwischen sich, zur Bildung des H-förmigen Querschnitts, eine weitere Wandung 14 aufnehmen. Diese drei ersten Wandungen 14 bilden den beim Extrudieren erzeugten Körper 13.

Die Crashbox 11 weist ferner zwei zweite Wandungen 15 auf, die gleichfalls im Extrusionsverfahren hergestellt sind. Diese zweiten Wandungen 15 weisen ein wellenförmiges Profil auf. Die beiden zweiten Wandungen 15 bilden bei der Crashbox 11 die Anfalthilfen. Bei gebildeter Crashbox 11 sind die zweiten Wandungen 15 in einer anderen Richtung als die ersten Wandungen 14, jeweils bezogen auf deren Extrusionsrichtung, wie sie in der Figur 4 veranschaulicht ist, angeordnet. Konkret sind die zweiten Wandungen 15 in einem rechten Winkel zu den ersten Wandungen 14 angeordnet, wiederum bezogen auf die Extrusionsrichtung der jeweiligen Wandung. In der Figur 4 sind, ausschließlich zur besseren zeichnerischen Darstellung, die beiden zweiten Wandungen 15 benachbart der Grundplatte 12 veranschaulicht. Diese beiden zweiten Wandungen 15 sind aber nicht mit der Grundplatte 12 verbunden. Die Verbindung mit der Grundplatte 12 erfolgt zwischen den Stirnseiten der beiden parallel angeordneten ersten Wandungen 14, somit nur in zwei Schweißbereichen, von denen ein ovaler Schweißbereich in der Figur 3 sichtbar ist. Verschweißt sind ferner die beiden zweiten Wandungen 15, und zwar stirnseitig, mit den beiden parallel angeordneten ersten Wandungen 14 im Bereich deren oberen bzw. unteren Enden. Die Bereiche der Schweißverbindungen sind in der Figur 3 mit ovalen Kreisen und dem Zusatz "Schweißverbindung " gekennzeichnet, der Bereich der fehlenden Schweißverbindung durch den entsprechenden ovalen Kreis mit dem Hinweis "keine Schweißverbindung". Im unteren Bereich der Crashbox 11 sind diese ovalen Kreise, allein aus Gründen besserer Erkennbarkeit der Crashbox und deren Anordnung zur Grundplatte nicht mit eingezeichnet.

Die Crashbox 11 und die Grundplatte 12 bestehen aus Aluminium. Die Verbindung von Stoßstangenmodul 4 und Crashbox 11 sowie Crashbox 11 und Grundplatte 12 kann auf jede geeignete Art und Weise erfolgen, beispielsweise durch eine Bolzen-Mutter-Verbindung zwischen Stoßstangenmodul und Crashbox bzw. eine Schraubverbindung zwischen Grundplatte 12 und Längsträger 3.

## Patentansprüche

1. Crashbox (11) für Kraftfahrzeuge, wobei die Crashbox (11) erste Wandungen (14) aufweist, die im Extrusionsverfahren hergestellt sind und, bezogen auf deren Extrusionsrichtung, im Wesentlichen in Fahrzeugfahrtrichtung Geradeaus angeordnet sind, wobei die Crashbox (11) zweite Wandungen (15) aufweist, die im Extrusionsverfahren hergestellt sind und, bezogen auf deren Extrusionsrichtung, in einer anderen Richtung als die ersten Wandungen (14) angeordnet sind, **dadurch gekennzeichnet, dass** die zweiten Wandungen (15) ein von einer Geraden abweichendes Profil aufweisen und die ersten Wandungen (14) mit den zweiten Wandungen (15) verschweißt sind.

2. Crashbox nach Anspruch 1, **dadurch gekennzeichnet, dass** die zweiten Wandungen (15) Anfalthilfen aufweisen.

3. Crashbox nach Anspruch 1 oder 2, **dadurch gekennzeichnet, dass** die zweiten Wandungen (15), bezogen auf deren Extrusionsrichtung, im rechten Winkel zu den ersten Wandungen (14), bezogen auf deren Extrusionsrichtung, angeordnet sind.

4. Crashbox nach einem der Ansprüche 1 bis 3, **dadurch gekennzeichnet, dass** die ersten Wandungen (14) ein gerades Profil aufweisen.

5. Crashbox nach einem der Ansprüche 1 bis 4, **dadurch gekennzeichnet, dass** mehrere erste Wandungen (14) einen extrudierten Körper (13) der Crashbox (11) bilden.

6. Crashbox nach Anspruch 5, **dadurch gekennzeichnet, dass** der Körper (13) H-förmigen Querschnitt aufweist.

7. Crashbox nach Anspruch 1 bis 6, **dadurch gekennzeichnet, dass** das Profil der zweiten Wandungen (15) Wellenform aufweist.

8. Crashbox nach einem der Ansprüche 1 bis 7, **dadurch gekennzeichnet, dass** zwei zweite Wandungen (15) vorgesehen sind, die senkrecht zu den parallelen Schenkeln des H-förmigen Körpers (13) angeordnet sind, insbesondere in den abgewandten Endbereichen des Körpers (13), parallel zu dem die Schenkel des Körpers (13) verbindenden Steg angeordnet sind.

9. Crashbox nach einem der Ansprüche 1 bis 8, **dadurch gekennzeichnet, dass** die zweiten Wandungen (15) stirnseitig mit ersten Wandungen (14) verschweißt sind.

10. Crashbox nach einem der Ansprüche 1 bis 9, **dadurch gekennzeichnet, dass** erste Wandungen (14) mit einer Grundplatte (12) verschweißt sind, insbesondere stirnseitig mit der Grundplatte (12) verschweißt sind.

11. Crashbox nach einem der Ansprüche 1 bis 10, **dadurch gekennzeichnet, dass** sie aus Aluminium besteht.

## Claims

1. Crashbox (11) for motor vehicles, wherein the crashbox (11) has first walls (14), which are produced in the extrusion process and in relation to the direction of extrusion, are arranged straight ahead substantially in the direction of travel of the vehicle, wherein the crashbox (11) has second walls (15), which are produced in the extrusion process and in relation to the direction of extrusion, are arranged in a different direction from the first walls (14), **characterised in that** the second walls (15) have a profile differing from a straight line and the first walls (14) are welded to the second walls (15).

2. Crashbox according to claim 1, **characterised in that** the second walls (15) have crumple aids.

3. Crashbox according to claim 1 or 2, **characterised in that** in relation to their direction of extrusion, the second walls (15) are arranged at a right angle to the first walls in relation to their direction of extrusion.

4. Crashbox according to one of claims 1 to 3, **characterised in that** the first walls (14) have a straight profile.

5. Crashbox according to one of claims 1 to 4, **characterised in** the a plurality of first walls (14) form an extruded body (13) of the crashbox (11).

6. Crashbox according to claim 5, **characterised in that** the body (13) has an H-shaped cross-section.

7. Crashbox according to claim 1 to 6, **characterised in that** the profile of the second walls (15) has a wave shape.

8. Crashbox according to one of claims 1 to 7, **characterised in that** two second walls (15) are provided, which are arranged perpendicular to the parallel legs of the H-shaped body (13), in particular are arranged in the remote end regions of the body (13) parallel to the crosspiece connecting the legs of the body (13).

9. Crashbox according to one of claims 1 to 8, **characterised in that** the second walls (15) are welded at their flanks to first walls (14).

10. Crashbox according to one of the claims 1 to 9, **characterised in that** first walls (14) are welded to a base plate (12), in particular are welded at their flanks to the base plate (12).

11. Crashbox according to one of claims 1 to 10, **characterised in that** it is made of aluminium.

## Revendications

1. Boîte d'écrasement (11) pour véhicules automobiles, la boîte d'écrasement (11) présentant des premiers parois (14), fabriquées par un procédé d'extrusion et, en se référant à sa direction d'extrusion, disposées sensiblement en ligne droite dans la direction de roulage du véhicule, la boîte d'écrasement (11) présentant des deuxièmes parois (15) fabriquées selon un procédé d'extrusion, disposées dans une autre direction que les premières parois (14), **caractérisée en ce que** les deuxièmes parois (15) présentent un profil différent d'une droite et les premières parois (14) sont soudées aux deuxièmes parois (15).

2. Boîte d'écrasement selon la revendication 1, **caractérisée en ce que** les deuxièmes parois (15) présentent des aides au pliage.

3. Boîte d'écrasement selon la revendication 1 ou 2, **caractérisée en ce que** les deuxièmes parois (15), en se référant à leur direction d'extrusion, sont disposées à angle droit par rapport aux premières parois (14) en se référant à leur direction d'extrusion.

4. Boîte d'écrasement selon l'une des revendications 1 à 3, **caractérisée en ce que** les premières parois (14) présentent un profil rectiligne.

5. Boîte d'écrasement selon l'une des revendications 1 à 4, **caractérisée en ce que** plusieurs premières parois (14) forment un corps (13) extrudé de la boîte d'écrasement (11).

6. Boîte d'écrasement selon la revendication 5, **caractérisée en ce que** le corps (13) présente une section transversale en forme de H.

7. Boîte d'écrasement selon les revendications 1 à 6, **caractérisée en ce que** le profil des deuxièmes parois (15) présente une forme ondulée.

8. Boîte d'écrasement selon l'une des revendications 1 à 7, **caractérisée en ce que** deux deuxièmes parois (15) sont prévues, disposées perpendiculairement par rapport aux branches parallèles du corps (13) en forme de H, en particulier sont disposées dans les zones d'extrémité opposées du corps (13), parallèlement à l'âme reliant les branches du corps (13).

9. Boîte d'écrasement selon l'une des revendications 1 à 8, **caractérisée en ce que** les deuxièmes parois (15) sont soudées côté frontal à des premières parois (14).

10. Boîte d'écrasement selon l'une des revendications 1 à 9, **caractérisée en ce que** des premières parois (14) sont soudées à une plaque de base (12), en particulier, sont soudées côté frontal à la plaque de base (12).

11. Boîte d'écrasement selon l'une des revendications 1 à 10, **caractérisée en ce** en ce qu'elles sont formées en aluminium.
